Europäisches Patentamt

European Patent Office

Office européen des brevets

(19)

(11) Veröffentlichungsnummer: **0 268 961**
**B1**

(12) **EUROPÄISCHE PATENTSCHRIFT**

(45) Veröffentlichungstag der Patentschrift:
**03.10.90**

(51) Int. Cl.⁵: **F16B 35/06**

(21) Anmeldenummer: **87116833.2**

(22) Anmeldetag: **14.11.87**

(54) Senkkopfschraube.

(30) Priorität: **22.11.86 DE 3639964**

(43) Veröffentlichungstag der Anmeldung:
**01.06.88 Patentblatt 88/22**

(45) Bekanntmachung des Hinweises auf die Patenterteilung:
**03.10.90 Patentblatt 90/40**

(84) Benannte Vertragsstaaten:
**AT CH ES FR IT LI**

(56) Entgegenhaltungen:
EP-A- 0 147 515
CH-A- 106 594
DE-B- 2 348 117
DE-U- 1 607 884
DE-U- 1 782 943
FR-A- 522 797
US-A- 1 857 388
US-A- 3 903 784

(73) Patentinhaber: **Peri-Werk Artur Schwörer GmbH & Co.KG, Rudolf-Diesel-Strasse, D-7912 Weissenhorn(DE)**

(72) Erfinder: **Schwörer, Arthur, Am Waldblick 7, D-7913 Senden(DE)**
Erfinder: **Morhard, Georg, Lettenberg 23, D-8908 Krumbach(DE)**

(74) Vertreter: **Patentanwälte Kohler - Schwindling - Späth, Hohentwielstrasse 41, D-7000 Stuttgart 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Senkkopfschraube mit Schneideteilen an der Unterseite des Kopfbereiches.

Eine derartige Senkkopfschraube ist durch die DE-A 3 346 704 bekannt geworden, bei der die Schneiderippen an der Unterseite des kegelstumpfförmigen Schraubenkopfes biz zur Oberfläche des Schraubenkopfes heraufgeführt sind. Ist diese Schraube beispielsweise zur Befestigung einer Holzplatte biz zum oberen Ende des etwa zylindrischen Schraubenschaftes eingedreht, so greifen beim weiteren Einschrauben die Schneiderippen in die Plattenoberfläche ein und schälen dort eine Aussparung heraus, in die der Schraubenkopf eintritt. Bei diesen senkkopfschrauben läßt sich die Einschraubtiefe nicht genau einhalten, denn das zum Schrauben erforderliche Drehmoment steigt zwar, je weiter der kegelstumpfförmige Schraubenkopf in die Plattenoberfläche eintritt, bleibt aber konstant, sobald die Schneiderippen, die bis zum äußeren Rand und bis zur oberen Fläche des Schraubenkopfes verlaufen, eine Fläche in der Platte ausgeschält haben, die mit der Querschnittsfläche des Schraubenkopfes übereinstimmt. Wird dann die Schraube weiter eingedreht, so ist die Oberfläche ihres Kopfes nicht mehr bündig mit dr Plattenoberfläche sondern gegenüber dieser in die Platte eingesenkt. Bei diesen bekannten Schrauben ist es daher schwierig, das Einschrauben der Schraube in einem bestimmten Augenblick zu unterbrechen, z.B. dann, wenn die Oberseite des Schraubenkopfes mit der Oberfläche der Platte gerade bündig ist, weil sich das Drehmoment beim Einschrauben in dieser Lage der Schraube, betrachtet man nur das von den Schneiderippen aufgezehrte Drehmoment, nicht mehr wesentlich ändert. Es ist jedoch bei machen Anwendungen erwünscht, daß der Schraubenkopf einer derartigen Senkkopfschraube um ein bestimmtes Maß über die Plattenoberfläche hinaussteht. Diese Aufgabe läßt sich mit den vorgenannten bekannten Senkkopfschrauben nicht zufriedenstellend lösen, weil in dieser Stellung das Drehmoment, das vom Schraubendreher aufgebracht werden muß, sich nicht schlagartig so stark ändert, daß diese Änderung zum Abschalten des Antriebes des Schraubendrehers verwendet werden könnte.

Bei Schaltafeln für Betonschalungen besteht jedoch die Aufgabe, die Schalhaut auf ihrer Trägerkonstruktion mit Schrauben zu befestigen, die über die Oberfläche der Platte um ein bestimmtes Maß hinausstehen. Die als Schalhaut verwendeten Platten bekannter Schaltafeln bestehen nämlich aus einem holzhaltigen Werkstoff, der in der Feuchtigkeit aufquillt. Dies bedeutet aber, daß die Oberfläche des Schraubenkopfes, wenn sie bei fabrikneuer Schaltafel bündig mit der Plattenoberfläche war, bei aufgequollener Platte gegen die Plattenoberfläche zurücksteht.

Die fertige Betonwand weist dann an denjenigen Stellen, an denen Befestigungsschrauben an den Schaltafeln sich befanden, Vorsprünge auf. Diese Vorsprünge müssen in Regel in der fertigen Betonwand abgeschliffen werden. Wird dies nicht innerhalb einer kurzen Zeit nach dem Abbinden des Betons gemacht, so setzt der sich nun erhärtende Beton dem Abschleifen einen erheblichen Widerstand entgegen.

Demgegenüber ist es bei derartigen Schaltafeln für Betonwände günstiger, wenn der Schraubenkopf über die Oberfläche der Schalthaut hinaussteht, z.B. um daß Maß, das dem Maß entspricht, um das die Schalhaut bei Feuchtigkeit, also beim Betonieren, aufquillt. Dabei nimmt man lieber in Kauf, daß das Maß, um das die Köpfe der Befestigungsschrauben über die Oberfläche der Schalthaut hinausstehen, größer ist als das Quellmaß der Schalhaut, als wenn bei aufgequollener Schalhaut an den Stellen, an denen die Befestigungsschrauben sich befinden, Vertiefungen sind. Denn durch vorstehende Köpfe in der Schalhaut entstehende Vertiefungen in der fertigen Betonwand können verhältnismäßig einfach mit Spachtelmaße ausgefüllt werden, deren Zusammensetzung beispielsweise so gewählt sein kann, daß sie nach dem Abtrocknen die gleiche Farbe wie der Beton annimmt, wogegen in der fertigen Betonwand durch Vertiefungen in der Schalhaut entstandene Vorsprünge, wie oben erwähnt, wesentlich schwieriger entfernt werden können.

Durch die US-PS 3 903 784 ist nun eine Senkkopfschraube bekanntgeworden, deren kegelstumpfförmiger Schraubenkopf an seinem äußeren Rand eine nach unten bordartig vorstehende Randleiste aufweist, die als Schneide ausgebildet ist, so daß sich diese Schneide beim Eindrehen der Senkkopfschraube in die Oberfläche der Unterlage ein Stück weit eindrückt. Da aber das Maß des Eindringens des Schneidkragens in die Oberfläche davon abhängt, welchen Widerstand der betreffende Werkstoff an dieser Stelle dem Eindringen des Schneidkragens entgegengesetzt, ist nicht sichergestellt, dass alle Schrauben um genau das gleiche Mass von der Plattenoberfläche abstehen. Hinzu kommt, dass holziges Material enthaltende Platten, wie beispielsweise als Schalhaut verwendete Platten von Schalelementen für Betonwände, einen Widerstand gegen das Eindringen des schneidkragens aufweisen, der sehr stark vom Feuchtigkeitsgehalt des Plattenmaterials abhängt. Ausserdem handelt es sich bei der aus der US-PS 3 903 784 bekannten Senkkopfschraube offenbar um eine Maschinenschraube, dessen Ende stumpf ausläuft.

Der Erfindung liegt die Aufgabe zugrunde, eine Senkkopfschraube zu entwickeln, die für diejenigen Anwendungsfälle sehr geeignet ist, in denen gewünscht wird, dass der Kopf der selbstschneidenden Senkkopfschraube mit möglichst grosser Genauigkeit um ein bestimmtes Mass über die Oberfläche der Unterlage vorsteht.

Diese Aufgabe wird gemäss der Erfindung dadurch gelöst, dass an der Unterseite des Kopfbereiches auf das kopfseitige Ende der Schneideteile mit jeweils einer achsparallelen Kante eine ebene, zur Schraubenachse rechtwinklig radial verlaufende Anschlagfläche folgt, die sich beim Eindrehen der Schraube an die Oberfläche des zu befestigenden Teiles anlegt und frei von Schneideteilen ist, und dass der ein Gewinde tragende Schraubenschaft in eine Spitze ausläuft. Dies hat den Vorteil, dass trotz der Schneidkanten, die den Raum für die Senkkopfschraube in dem zu befestigenden Teil herausschälen, das von dem Schraubendreher aufzubringende Drehmoment in dem Augenblick schlagartig sehr stark ansteigt, in dem sich diese Fläche auf die Oberfläche des zu befestigenden Teils auflegt. Diese Auflagefläche soll nicht in die Oberfläche des Teils eindringen, so dass örtliche Materialunterschiede in dem zu befestigenden Teil keinen oder nur einen sehr unwesentlichen Einfluß auf das Maß ausüben, um das der Schraubenkopf über die Oberfläche des zu befestigenden Teiles hinausragt. Beim Anlegen dieser Anschlagfläche auf die Oberfläche des zu befestigenden Teiles steigt das vom Schraubendreher aufzubringende Drehmoment schlagartig außerordentlich hoch an, so daß diese Änderung des Drehmomentes in aller Regel zum Abschalten des Antriebs des Schraubendrehers völlig ausreicht.

Die Anschlagfläche kann auch auf andere Weise ausgebildet sein, beispielsweise durch eine Unterlagsscheibe, deren Innendurchmesser dem Durchmesser entspricht, den der Gewindeschaft oder der Senkkopf der Schraube an derjenigen Stelle aufweist, die dem Abstandsmaß von der Oberseite des Senkkopfes entspricht, bei dessen Erreichen das Einschrauben beendet werden soll. Beim Einschrauben gleitet die Unterlagsscheibe soweit axial entlang des Schraubenschaftes nach oben, bis diese Bewegung dadurch beendet wird, daß der kegelförmig sich erweiternde Schaft an den Rand der inneren Aussparung der Unterlagsscheibe sich anlegt und nicht weiter durch diese Aussparung hindurchtreten kann. Auch bei dieser Ausführungform kann die Senkkopfschraube nicht weiter in das zu befestigende Teil eingeschraubt werden, weil diese Anlagefläche der Unterlagsscheibe keine Schneiderippen aufweist, die eine entsprechende Aussparung in der Oberfläche des zu befestigenden Teiles ausräumen würden.

Der Abstand es unteren Randes des von Schneideteilen freien Abschnittes und auch das Maß, an dem die vorstehend genannte Unterlagsscheibe ein weiteres Einschrauben der Schraube verhindert, kann von Anwendungsfall zu Anwendungsfall dieser Schrauben verschieden sein. Bei der Anwendung derartiger Senkkopfschrauben zum Befestigen von Platten der Schalhaut an ihrer Abstützung bei Betonschalungen kann dieses Maß mit dem Maß übereinstimmen, um das die Platten in der Feuchtigkeit aufquellen, bei handelsüblichen Schalhäuten kann dieses Maß 1 mm bis 1,5 mm betragen.

Die an der Unterseite des Kopfes der Senkkopfschraube vorgesehenen Schneideteile können aus achsparallelen Spitzen bestehen, die die erforderliche Aussparung in der Plattenoberfläche ausräumen. Sie können auch bei einer Ausführungsform der Erfindung die Form von Schneiderippen haben, beispielsweise können zwei Schneiderippen über den Umfang des Kopfes verteilt sein. Diese Schneiderippen können so geformt sein, daß sie an ihrem unteren Ende an der Stelle in den Schaft auslaufen, an der er sich zur Bildung des Senkkopfes erweitert.

Wie bereits erwähnt, können die erfindungsgemäßen Senkkopfschrauben nicht nur zur Befestigung von die Schalhaut einer Schaltafel bildenden Platten an ihrer Abstützung verwendet werden, sondern überall dort, wo der Kopf der Senkkopfschraube um ein bestimmtes Maß über die Oberfläche des Teiles hinausstehen soll, in das die Senkkopfschraube eindringt.

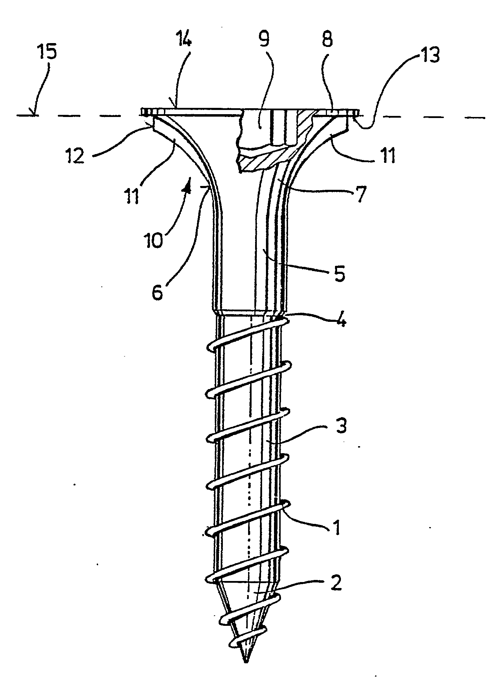

Weitere Merkmale der Erfindung ergeben sich aus der folgenden Beschreibung einer Ausführungsform der Erfindung in Verbindung mit der Zeichnung. Die einzelnen Merkmale können je für sich oder zu mehreren bei Ausführungsformen der Erfindung verwirklicht sein.

In der Zeichnung ist eine Auführungsform der erfindungsgemäßen Senkkopfschraube in Ansicht in vergrößertem Mäßstab dargestellt.

Die in der Zeichnung dargestellte Ausführungsform einer Senkkopfschraube weist ein Gewinde 1 auf, das sich von der Spitze 2 des Schaftes über etwas mehr als die Hälfte des zylindrischen Schaftabschnittes 3 nach oben erstreckt. An das obere Ende 4 des Gewindes schließt sich e-in glatter, zylindrischer Schaftabschnitt 5 an, der bei 6 in den Kopf 7 der Senkschraube übergeht, dessen Durchmesser sich kegelförmig oder auch mit gekrümmter Außenfläche erweitert. Am oberen Kopfende folgt wieder ein zylindrischer Abschnitt 8, dessen Höhe allerdings sehr klein ist. In dem Kopf 7 ist von oben eine Aussparung 9 eingearbeitet, die beispielsweise zum Einsetzen eines Imbus- oder eines Torx-Schraubendrehers geeignet ist. An der Unterseite 10 des Kopfes 7 sind in einander gegenüberliegenden Stellen jeweils eine Schneiderippe 11 angeordnet, die am unteren Kopfende bei 6 in die glatte Oberfläche des Schaftabschnittes 5 ausläuft, an ihrem oberen Ende jedoch am weitesten von der Unterseite des Kopfes 7 absteht. Die Schneiderippe 11 weist an ihrem oberen Ende eine achsparallele Kante 12 auf. Eine ebene, zur Schraubenachse rechtwinklig radial verlaufende Anschlagfläche 13 zwischen der Kante 12 und dem zylindrischen Teil 8 des Kopfes weist daher eine glatte Oberfläche auf und ist daher frei von den Schneiderippen.

Ist die Senkkopfschraube bis zu der Stelle 6 eingeschraubt, so erweitern beim weiteren Einschrauben die Schneiderippen 11 den oberen Rand der Aussparung, in die die Senkkopfschraube weiter eindringt. Dieses Erweitern findet so lange statt, bis die Senkkopfschraube bis zum oberen Ende der Schneiderippen 11 eingeschraubt ist. Beim weiteren Einschrauben kommt dann die glatte Anschlagfläche 13 der Unterseite des Kopfes 7 zur Anlage an den Rand dieser Aussparung, dessen Durchmesser jedoch nicht erweitert wird, weil die Schneiderippen in diesem Bereich des Schraubenkopfes fehlen.

Die Anschlagfläche 13 legt sich daher an die Oberfläche des zu befestigenden Teiles an, ohne daß er um ein wesentliches Maß in diese Oberfläche eindringt oder nur so weit eindringt, als die glatte Anschlagfläche 13 dies erlaubt.

Dadurch steigt das zum weiteren Eindrehen der Schraube erforderliche Drehmoment so stark, z.B.

sprunghaft, an, daß dieses Ansteigen von der die Schraube eindrehenden Person oder aber von dem auf die Abgabe eines bestimmten Drehmomentes eingestellten Schraubgerät bemerkt wird. Dann ist dieses bestimmte Maß erreicht, um das die Oberfläche 14 des Schraubenkopfes 7 über die Oberfläche 15 eines Teiles, z.B. einer Schalhaut, vorstehen soll, in das die Schraube eingeschraubt werden soll. Dieses Maß kann beispielsweise 1 mm betragen.

Bei der einleitend beschriebenen Ausführungsform der Erfindung, bei der der Abstand zwischen der Oberfläche 14 des Schraubenkopfes 7 und einer Oberfläche 15 eines Teiles, über das der Schraubenkopf hinausragen soll, durch eine Unterlegscheibe erreicht werden soll, können die Schneiderippen 11 an der Unterseite des Schraubenkopfes fehlen, z.B. dann, wenn die Aussparung in der Oberfläche 15, in die der Kopf eintreten soll, durch einen besonderen Bohrvorgang vor dem Eindrehen der Schraube eingebohrt wird. Dafür liegt die kegelförmige Unterseite des Schraubenkopfes 7 an dem inneren Rand einer Unterlagscheibe an, beispielsweise in einem achsparallelen Abstand der halben Höhe des Kopfes 7 von dessen Oberfläche 14.

Die beschriebenen Ausführungsformen der Senkkopfschraube eignen sich nicht zur zur Befestigung der Schalhaut einer Schaltafel an ihrer Abstützung, beispielsweise an der durch Holzgitterträger oder Rahmenschenkel bestehenden Abstützung für die Schalhaut, sondern auch für alle Anwendungszwecke, bei denen Senkkopfschrauben über die benachbarte Oberfläche hinausragen sollen.

**Patentansprüche**

1. Senkkopfschraube mit Schneideteilen an der Unterseite des Kopfbereiches, dadurch gekennzeichnet, dass an dieser Unterseite auf das kopfseitige Ende der Schneideteile (11) mit jeweils einer achsparallelen Kante (12) eine ebene, zur Schraubenachse rechtwinklig radial verlaufende Anschlagfläche (13) folgt, die sich beim Eindrehen der Schraube an die Oberfläche (15) des zu befestigenden Teiles anlegt und frei von Schneideteilen (11) ist, und dass der ein Gewinde (1) tragende Schraubenschaft in eine Spitze (2) ausläuft.

2. Schraube nach Anspruch 1, dadurch gekennzeichnet, dass die Anschlagfläche (13) einen Abstand von etwa 1 mm von der Kopfoberfläche aufweist.

3. Schraube nach Anspruch 1 oder 2, dadurch gekennzeichnet, dass die Schneideteile aus Schneiderippen (11) bestehen.

4. Schraube nach einem der vorhergehenden Ansprüche, dadurch gekennzeichnet, dass als Schneiderippen ausgebildete Schneideteile (11) am Schaft (5) auslaufen.

**Claims**

1. Flat-head countersunk screw comprising cutting elements disposed at a bottom face of the head area, characterized in that the ends of the cutting elements (11) which comprise an edge (12) parallel to the axis of the screw and are adjacent to the head of the screw are followed, at the bottom face, by a plane radial stop face (13) extending perpendicular to the axis of the screw, in a radial direction, that the stop face (13) is free of any cutting elements (11) and bears against a surface (15) of the element to be mounted as the screw is screwed thereinto, and that the shaft of the screw bearing a thread (1) tapers to a point (2).

2. Screw according to claim 1, characterized in that the said stop face (13) is spaced from the surface of the said head by about 1 mm.

3. Screw according to claim 1, characterized in that the said cutting elements consist of cutting ribs (11).

4. Screw according to claim 1, characterized in that the said cutting elements (11), which are designed as cutting ribs, taper off at the barrel (5) of the screw.

**Revendications**

1. Vis à tête fraisée munie d'éléments tranchants adjacents à la face inférieure de la région de tête, caractérisée en ce que, sur cette face inférieure, l'extrémité côté tête des éléments tranchants (11) qui possèdent chacun une arête (12) parallèle à l'axe, est suivie d'une surface de butée (13) plane, s'étendant radialement perpendiculairement à l'axe de la vis, qui s'appuie sur la surface (15) de la pièce à fixer lorsqu'on visse la vis, et qui est exempte d'éléments tranchants (11) et en ce que la tige de la vis qui porte un filetage (11) se termine par une pointe (2).

2. Vis selon la revendication 1, caractérisée en ce que la surface de butée (13) se trouve à une distance d'environ 1 mm de la surface de la tête.

3. Vis selon la revendication 1 ou 2, caractérisée en ce que les éléments tranchants sont composés d'ailettes tranchantes (11).

4. Vis selon une des revendications précédentes, caractérisée en ce que les éléments tranchants (11) qui sont constitués par des ailettes tranchantes finissent en mourant sur la tige (5).